# EUROPEAN PATENT APPLICATION

(11) **EP 4 401 211 A1**
(43) Date of publication of application: **17.07.2024**
(21) Application number: 23171758.8
(22) Date of filing: 05.05.2023
(51) Int. Cl.: H01M 50/169, H01M 50/593, H01M 10/04, H01M 50/15, H01M 50/103, H01M 50/291

(54) **BATTERY AND MANUFACTURING METHOD THEREOF, AND BATTERY DEVICE**

(30) Priority: 13.01.2023 CN 202310065817
(71) Applicant: CALB Group Co., Ltd., Changzhou City, Jiangsu Province (CN)
(72) Inventor: GU, Liangjie, Changzhou City (CN); GUAN, Junshan, Changzhou City (CN); ZHANG, Yongjie, Changzhou City (CN)
(74) Representative: Becker, Eberhard

(57) **Abstract**

A battery (10) and manufacturing method thereof, and a battery device. The battery (10) includes a housing member (11) and a cover plate (12), wherein the housing member (11) is provided therein with an accommodating cavity having an opening; the cover plate (12) is provided to block the opening; the housing member (11) includes a housing body (111) and a first flanging (112) connected to an end of the housing body (111) close to the cover plate (12), and the first flanging (112) extends away from the cover plate (12); the cover plate (12) includes a plate body (121) and a second flanging (122), the second flanging (122) is provided at an edge of the plate body (121), and the second flanging (122) extends close to the housing member (11), the first flanging (112) being welded to the second flanging (122).

## Description

### BACKGROUND

### Technical Field

The present disclosure relates to the technical field of batteries, and more particularly to a battery and a manufacturing method thereof, and a battery device.

### Description of Related Art

With the development and progress of technologies, the application of electric vehicles is increasingly widespread. A battery device for powering an electric vehicle is often provided in an electric vehicle. Multiple batteries are often provided in a battery device. A battery includes a housing, a cell, a pole assembly, etc. The cell is provided in the housing, and the pole assembly is provided in the housing and connected to the cell. When the battery housing is formed by welding, the heat generated by the welding is liable to damage the cell or the pole assembly, thereby reducing the yield of the battery.

It needs to be noted that the information disclosed in the background art is only used to strengthen the understanding of the background of the present disclosure. Therefore, it can include information that does not constitute the prior art known to ordinary technicians in the art.

### SUMMARY

It is an object of the present disclosure to provide a battery and a manufacturing method thereof, and a battery device, thereby improving the yield of the battery at least to some extent.

According to the first aspect of the present disclosure, a battery is provided, comprising:
a housing member provided therein with an accommodating cavity having an opening; and
a cover plate provided at an opening of the housing member to block the opening;
wherein the housing member comprises a housing body and a first flanging, the first flanging is connected to an end of the housing body close to the cover plate, and the first flanging extends in a direction of the housing body away from the cover plate; the cover plate comprises a plate body and a second flanging, the second flanging is provided at an edge of the plate body, and the second flanging extends in a direction of the plate body close to the housing member, the first flanging being welded to the second flanging.

An embodiment of the present disclosure provides a battery comprising a housing member and a cover plate. A first flanging extending in a direction away from the cover plate is provided on the housing member, a second flanging extending in a direction close to the housing member is provided on an edge of the cover plate, and the housing member and the cover plate are connected by welding the first flanging and the second flanging. Therefore, the housing member and the cover plate are welded at a point away from a pole assembly and a cell, thereby preventing the heat generated when the housing member is welded to the cover plate from damaging the pole assembly or the cell, and improving the yield and safety of the battery.

According to the second aspect of the present disclosure, a battery device is provided, comprising a battery assembly. The battery assembly comprises:
the battery mentioned above; and
an insulating support, wherein the insulating support is sleeved on the battery.

An embodiment of the present disclosure provides a battery device comprising a battery. The battery comprises therein a housing member and a cover plate. A first flanging extending in a direction away from the cover plate is provided on the housing member, a second flanging extending in a direction close to the housing member is provided on the edge of the cover plate, and the housing member and the cover plate are connected by welding the first flanging and the second flanging. Therefore, the housing member and the cover plate are welded at a point away from a pole assembly and a cell, thereby preventing the heat generated when the housing member is welded to the cover plate from damaging the pole assembly or the cell, and improving the yield and safety of the battery device. Besides, the insulating support sleeved on the battery achieves the insulation between the battery and an adjacent conductive device, further improving the safety of the battery device.

According to the third aspect of the present disclosure, a battery manufacturing method is provided. The battery manufacturing method comprises:
providing a first sheet material and a second sheet material;
stamping the first sheet material to form a cover plate having an edge with a second flanging; and
stamping the second sheet material in a first direction to form a first flanging on the edge of the second sheet material, and stamping the second sheet material in a second direction to form a housing body so as to form a housing member having an accommodating cavity and the first flanging, the first direction and the second direction being opposite;
wherein the cover plate is mounted to the housing member, and the first flanging is welded to the second flanging.

According to the battery manufacturing method provided by the embodiments of the present disclosure, a cover plate having a second edgefold is formed by stamping the first sheet material, the second sheet material is stamped twice in opposite directions to form and have an accommodating cavity and the first edgefold, and the housing member and the cover plate are connected by welding the first flanging and the second flanging. Therefore, the housing member and the cover plate are welded at a point away from a pole assembly and a cell, thereby preventing the heat generated when the housing member is welded to the cover plate from damaging the pole assembly or the cell, and improving the yield and safety of the battery device. Besides, the insulating support sleeved on the battery achieves the insulation between the battery and an adjacent conductive device, further improving the safety of the battery device.

It should be understood that the above-mentioned general description and the following detailed description are only illustrative and explanatory, and do not limit the present disclosure.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural diagram of a battery provided by an exemplary embodiment of the present disclosure;
FIG. 2 is a schematic structural diagram of a housing member provided by an exemplary embodiment of the present disclosure;
FIG. 3 is a schematic structural diagram of a cover plate provided by an exemplary embodiment of the present disclosure;
FIG. 4 is a schematic structural diagram of a battery device provided by an exemplary embodiment of the present disclosure;
FIG. 5 is a schematic structural diagram of an insulating support provided by an exemplary embodiment of the present disclosure;
FIG. 6 is a schematic structural diagram of another insulating support provided by an exemplary embodiment of the present disclosure;
FIG. 7 is a schematic structural diagram of a battery device provided by an exemplary embodiment of the present disclosure;
FIG. 8 is a partially enlarged view of a device provided by an exemplary embodiment of the present disclosure;
FIG. 9 is a flowchart of a battery manufacturing method provided by an exemplary embodiment of the present disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

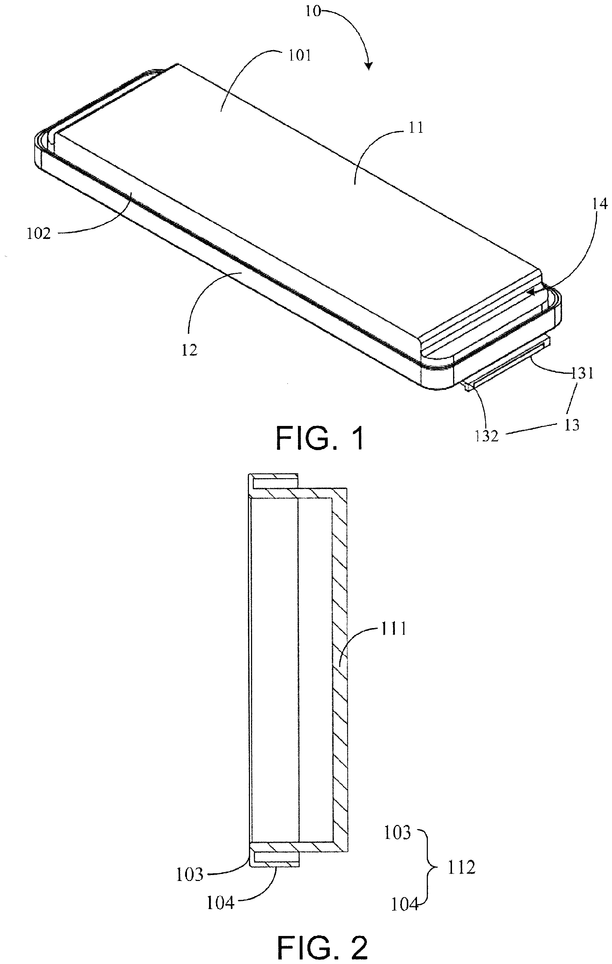

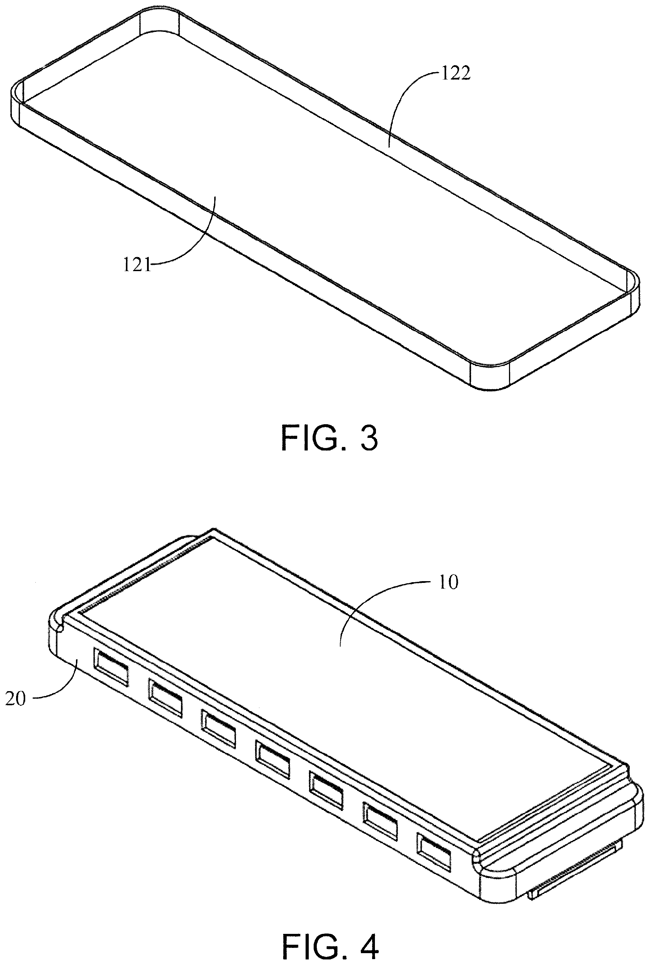

An exemplary embodiment of the present disclosure first provides a battery 10, as shown in FIG. 1, including a housing member 11 and a cover plate 12. The housing member 11 is provided therein with an accommodating cavity having an opening. The cover plate 12 is provided at the opening of the housing member 11 so as to block the opening. As shown in FIG. 2, the housing member 11 includes a housing body 111 and a first flanging 112. The first flanging 112 is connected to an end of the housing body 111 close to the cover plate 12. The first flanging 112 extends towards a direction of the housing body 111 away from the cover plate 12. As shown in FIG. 3, the cover plate 12 includes a plate body 121 and a second flanging 122. The second flanging 122 is provided at an edge of the plate body 121, the second flanging 122 extends towards a direction of the plate body 121 close to the housing member 11, and the first flanging 112 is welded to the second flanging 122.

An embodiment of the present disclosure provides a battery 10 including a housing member 11 and a cover plate 12. The first flanging 112 extending in a direction away from the cover plate 12 is provided on the housing member 11, a second flanging 122 extending in a direction close to the housing member 11 is provided on an edge of the cover plate 12, and the housing member 11 and the cover plate 12 are connected by welding the first flanging 112 and the second flanging 122. Therefore, the housing member 11 and the cover plate 12 are welded at a point away from a pole assembly 13 and a cell, thereby preventing the heat generated when the housing member 11 is welded to the cover plate 12 from damaging the pole assembly 13 or the cell, and improving the yield and safety of the battery.

Portions of the battery 10 provided by the embodiments of the present disclosure are described in detail below.

The housing member 11 and the cover plate 12 are connected to form a battery housing, the battery housing has an accommodating cavity therein, and a cell is provided in the accommodating cavity. The battery housing is provided thereon with a pole assembly 13, the pole assembly 13 is partially located outside the battery housing, and the pole assembly 13 partially extends into the battery housing and is connected to the cell.

The housing member 11 includes a housing body 111 and a first flanging 112. The first flanging 112 is connected to an end of the housing body 111 close to the cover plate 12, and the first flanging 112 extends towards the direction of the housing body 111 away from the cover plate 12. That is, an opening end of the housing body 111 is provided with the first flanging 112 extending towards a non-opening end of the housing body 111.

The housing body 111 may include an end panel and a frame. The frame is provided on one face of the end panel close to the cover plate 12, the frame is in an annular structure, and the frame and the end panel enclose to form an accommodating cavity. The first flanging 112 is connected to an end of the frame away from a short panel, and the first flanging 112 extends from an end of the frame away from the end panel towards a direction close to the end panel. The first flanging 112 is an outer flanging, that is, the first flanging 112 is located on the outer side of the frame, the outer side of the frame referring to a side of the frame away from the accommodating cavity. The frame can be formed by connecting multiple frame plates which are connected end to end, and the edges of the frame plate and the end panel are in a one-to-one correspondence.

The housing member 11 may be an integrally formed structure, for example, by stamping or casting. When the housing member 11 is formed by stamping, a blank may be stamped twice to form the housing body 111 and the first flanging 112. The stamping is performed by first stamping in a first direction to form a first flanging 112 at the edge of the blank and then stamping in a second direction to form the housing body 111. The first direction and the second direction are opposite. The blank may be a sheet material. The first direction and the second direction are perpendicular to the sheet material. Of course, in practical applications, the housing member 11 may also be a separately-formed structure. For example, the housing body 111 and the first flanging 112 are separately formed, and then connected by welding, etc. The embodiments of the present disclosure are not limited thereto.

The first flanging 112 includes a connecting segment 103 and a welding segment 104. The connecting segment 103 is connected to an end of the housing body 111 close to the cover plate 12, and the connecting segment 103 is located at a side of the housing body 111 away from the accommodating cavity. The welding segment 104 is connected to an end of the connecting segment 103 away from the housing body 111, and a gap is provided between the welding segment 104 and the housing body 111.

The connecting segment 103 is connected to an end of the frame away from the end panel, and the connecting segment 103 extends outwardly (in the direction away from the accommodating cavity) from the frame edge. For example, the scenario that the connecting segment 103 may be provided perpendicular to the frame when the connecting segment 103 is a planar structure. Alternatively, the connecting segment 103 may have a cambered surface structure, and the connecting segment 103 of the cambered surface structure can smoothly transition with the frame and the welding segment 104 to avoid the formation of stress concentration. The welding segment 104 is connected to an end of the connecting segment 103 away from the frame, the welding segment 104 configured for being weld to the cover plate 12. The welding segment 104 may be provided parallel to the frame with a gap between welding segment 104 and the frame. The gap, on the one hand, can prevent the heat generated by the welding from being transmitted to the cell and. On the other hand, it can be used to accommodate a welding seat during the welding to facilitate welding.

Illustratively, the battery provided by the embodiments of the present disclosure may be cuboid or approximately cuboid. On this basis, the housing body 111 is a cuboid thin-walled housing with one face open, and the first flanging 112 is a rectangular or approximately rectangular ring-shaped structure. The end panel is a rectangular plate. The frame is formed by a first frame plate, a second frame plate, a third frame plate, and a fourth frame plate which are connected end to end. The first frame plate, the second frame plate, the third frame plate, and the fourth frame plate are respectively provided on one of edges of the end panel. The first frame plate, the second frame plate, the third frame plate, and the fourth frame plate, and the end panel are perpendicularly provided.

The welding segment 104 includes a first welding face, a second welding face, a third welding face, and a fourth welding face which are sequentially connected to form a ring-shaped structure. The first welding face is provided on a side of the first frame plate away from the accommodating cavity, and the first welding face and the first frame plate are arranged in parallel. The second welding face is provided on a side of the second frame plate away from the accommodating cavity, and the second welding face and the second frame plate are arranged in parallel. The third welding face is provided on a side of the third frame plate away from the accommodating cavity, and the third welding face and the third frame plate are arranged in parallel. The fourth welding face is provided on a side of the fourth frame plate away from the accommodating cavity, and the fourth welding face and the fourth frame plate are arranged in parallel.

The cover plate 12 includes a plate body 121 and a second flanging 122 provided at an edge of the plate body 121, and the second flanging 122 extends towards a direction of the plate body 121 close to the housing member 11. The plate body 121 blocks the opening of the housing member 11. The second flanging 122 extends to and is welded to the first flanging 112 to connect the housing member 11 and the cover plate 12.

The second flanging 122 is at least partially opposite to the side of the welding segment 104 away from the housing body 111, and the welding segment 104 and the second flanging 122 are welded. The first flanging 112 is located between the second flanging 122 and the housing body 111. That is, the first flanging 112 surrounds the housing body 111, and the second flanging 122 surrounds the first flanging 112.

As an example, the plate body 121 may be a rectangular flat plate, and the second flanging 122 is perpendicular to the plate body 121. The second flanging 122 may include a first flanging 112 plate, a second flanging 122 plate, a third flanging plate, and a fourth flanging plate. The first flanging 112 plate, the second flanging 122 plate, the third flanging plate, and the fourth flanging plate are successively connected. The first flanging 112 plate, the second flanging 122 plate, the third flanging plate, and the fourth flanging plate respectively correspond to one of edges of the plate body 121.

The first flanging 112 plate at least partially coincides with the first welding face, and the first flanging 112 plate is welded to the first welding face. The second flanging 122 plate at least partially coincides with the second welding face, and the second flanging 122 plate is welded to the second welding face. The third flanging plate at least partially coincides with the third welding face, and the third flanging plate is welded to the third welding face. The fourth flanging plate at least partially coincides with the fourth welding face. and the fourth flanging plate is welded to the fourth welding face.

A cell is provided inside the battery housing, and a first tab and a second tab are provided on the cell. A first pole assembly and a second pole assembly are provided on the cover plate 12. The first tab is connected to the first pole assembly, and the second tab is connected to the second pole assembly.

The first tab and the second tab are respectively provided at two ends of the cell, and the first pole assembly and the second pole assembly are respectively provided at regions of the cover plate 12 close to the two ends along the length direction. The first tab and the first pole assembly are welded and the second tab and the second pole assembly are welded. Illustratively, the first tab is a positive tab, and the second tab is a negative tab. The first pole assembly is a positive pole 131, and the second pole assembly is a negative electrode.

In one embodiment, the battery is a laminated battery. It facilitates grouping, and can be processed to obtain a long battery. Specifically, the cell is a laminated cell. The cell has a first pole piece, a second pole piece electrically opposite to the first pole piece, and a diaphragm sheet arranged between the first pole piece and the second pole piece, which are laminated with each other. Therefore, multiple pairs of the first pole pieces and the second pole pieces are laminated to form a laminated cell.

Alternatively, the cell may be a wound cell. That is, the first pole piece, the second pole piece electrically opposite to the first pole piece, and the diaphragm sheet arranged between the first pole piece and the second pole piece are wound to obtain a wound cell.

The pole assembly 13 includes a pole 131 and an insulating member 132. The pole 131 is provided on the cover plate 12. The insulating member 132 is located at least between the pole 131 and the cover plate 12 to insulate the cover plate 12 from the pole 131.

In the related art, the insulating member 132 is located between the pole 131 and the cover plate 12. The cover plate 12 and the housing member 11 are welded, and the welded portion of the cover plate 12 and the housing member 11 coincides with the insulating member 132. The high temperature may damage the insulating member 132 when the cover plate 12 and the housing member 11 are welded. In the present application, the cover plate 12 and the housing member 11 are welded via the first flanging 112 and the second flanging 122, and the welding seam of the cover plate 12 and the housing member 11 are not in contact with the insulating member 132, so that the damage to the insulating member 132 can be avoided.

A portion of the pole assembly 13 located inside the battery housing is connected to the tab. A portion of the pole 131 located outside the battery housing is used to connect to a bus bar 30 and to be electrically connected (in series or in parallel) to other batteries through the bus bar 30. In order to facilitate the connection with the bus bar 30, the pole assembly 13 is provided at the end of the cover plate 12 along the length of the cover plate 12, and the pole assembly 13 partially protrudes out of the end of the cover plate 12 along the length direction.

A recess portion 14 is provided on the housing member 11, the recess portion 14 being provided on a face of the housing member 11 away from the cover plate 12, and an orthographic projection of the pole assembly 13 on the housing member 11 being located in the recess portion 14. When multiple batteries are laminated, the recess portion 14 serves to accommodate the pole assemblies 13 of adjacent batteries.

The pole assemblies 13 may be provided at two ends of the cover plate 12 respectively, and at this time, recesses 14 are respectively provided at two ends of the housing member 11. The depth of the recess portion 14 is greater than the height of the pole assembly 13 to avoid the contact between the pole assembly 13 and the housing member 11 of an adjacent battery when the batteries are grouped. The depth of the recess portion 14 is a dimension of the recess portion 14 in the direction perpendicular to the plate body 121, and the height of the pole assembly 13 is a dimension of the portion of the pole assembly 13 on a side of the cover plate 12 away from the housing body 111 in the direction perpendicular to the plate body 121.

In an embodiment of the present disclosure, the battery includes two first surfaces 101 (large surface) and multiple second surfaces 102 (small surface), the area of the first surface 101 being greater than the area of the second surface 102. The first surface 101 is a surface parallel to the cover plate 12, the multiple second surfaces 102 are provided between the two first surfaces 101, and the first flanging 112 is provided on the second surface 102 of the battery. That is, in the embodiment of the present disclosure, the pole 131 is provided on the large surface of the battery, and the first flanging 112 and the second flanging 122 are provided on the small surface of the battery.

The connecting segment 103 is perpendicular to the second surface 102, and the included angle between the welding segment 104 and the first surface 101 is 0-180°. For example, the included angle between the welding segment 104 and the first surface 101 is 0°, 30°, 45°, 90°, 135° or 180°, etc.

An embodiment of the present disclosure provides a battery including a housing member 11 and a cover plate 12. A first flanging 112 extending in a direction away from the cover plate 12 is provided on the housing member 11, a second flanging 122 extending in a direction close to the housing member 11 is provided on the edge of the cover plate 12, and the housing member 11 and the cover plate 12 are connected by welding the first flanging 112 and the second flanging 122. Therefore, the housing member 11 and the cover plate 12 are welded at a point away from a pole assembly 13 and a cell, thereby preventing the heat generated when the housing member 11 is welded to the cover plate 12 from damaging the pole assembly 13 or the cell, and improving the yield and safety of the battery.

An exemplary embodiment of the present disclosure also provides a battery device, as shown in FIG. 4, including a battery assembly including the above-described battery 10 and an insulating support 20 sleeved on the battery 10.

With regard to a battery housing member 11 and a cover plate 12, the housing member 11 is provided therein with an accommodating cavity having an opening. The cover plate 12 is provided at the opening of the housing member 11 so as to block the opening. The housing member 11 includes a housing body 111 and a first flanging 112. The first flanging 112 is connected to an end of the housing body 111 close to the cover plate 12, and the first flanging 112 extends towards a direction of the housing body 111 away from the cover plate 12. The cover plate 12 includes a plate body 121 and a second flanging 122. The second flanging 122 is provided at the edge of the plate body 121, the second flanging 122 extends towards a direction of the plate body 121 close to the housing member 11, and the first flanging 112 is welded to the second flanging 122.

The battery device provided by an embodiment of the present disclosure includes a battery, including therein a housing member 11 and a cover plate 12. A first flanging 112 extending in a direction away from the cover plate 12 is provided on the housing member 11, a second flanging 122 extending in a direction close to the housing member 11 is provided on the edge of the cover plate 12, and the housing member 11 and the cover plate 12 are connected by welding the first flanging 112 and the second flanging 122. Therefore, the housing member 11 and the cover plate 12 are welded at a point away from a pole assembly 13 and a cell, thereby preventing the heat generated when the housing member 11 is welded to the cover plate 12 from damaging the pole assembly 13 or the cell, and improving the yield and safety of the battery device. Besides, the insulating support 20 sleeved on the battery achieves the insulation between the battery and an adjacent conductive device, further improving the safety of the battery device.

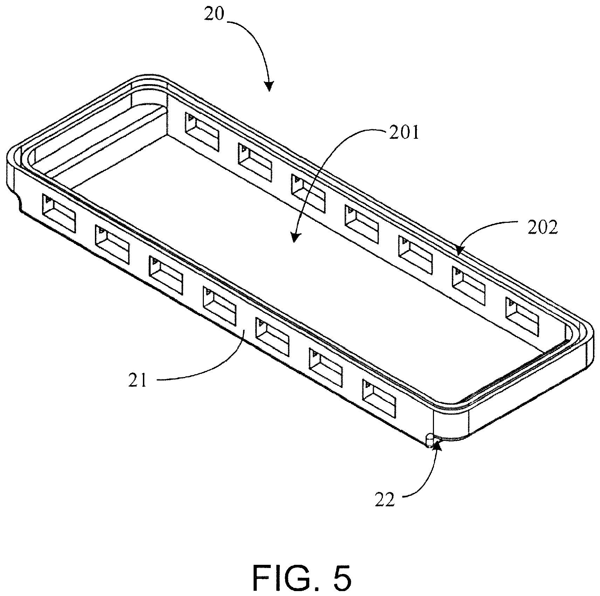

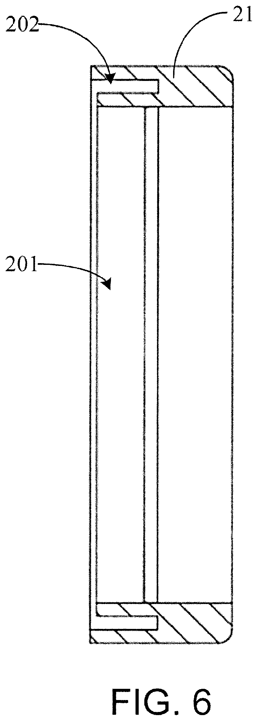

As shown in FIGS. 5 and 6, the insulating support 20 is provided with a first accommodating portion 201 and a second accommodating portion 202. The second accommodating portion 202 surrounds the first accommodating portion 201, the housing body 111 is located in the first accommodating portion 201, and the welding segment 104 and the second flanging 122 are located at least partially in the second accommodating portion 202. That is, the insulating support 20 is provided around the battery, and a groove for accommodating the first flanging 112 and the second flanging 122 is provided on the insulating support 20.

The insulating support 20 includes multiple insulating plates 21 which are successively connected end to end to form the first accommodating portion 201. An accommodating groove is provided on one face of the insulating plate 21 close to the cover plate 12, and the accommodating grooves on the multiple insulating plates 21 communicate to form the second accommodating portion 202. That is, the first accommodating portion 201 and the second accommodating portion 202 have a partition protrusion therebetween such that when the insulating support 20 is mounted to the battery, the partition protrusion protrudes into a gap between the first flanging 112 and the housing body 111 to support the first flanging 112 so as to prevent the first flanging 112 from being damaged due to vibration or like reasons during the use of the battery, thereby improving the stability and service life of the battery device.

As an example, when the battery has a cuboid or an approximately cuboid structure, the insulating support 20 may include four insulating plates 21. The four insulating plates 21 are successively connected end to end to form a cuboid or an approximately cuboid framework, and the battery is sleeved in the framework.

The battery includes two first surfaces 101 and multiple second surfaces 102. The area of the first surface 101 is greater than the area of the second surface 102, the insulating support 20 surrounds the multiple second surfaces 102 of the battery, and the insulating plate 21 corresponds to the second surfaces 102 of the battery one by one. That is, the insulating support 20 surrounds a small surface of the battery.

A pole assembly 13 is provided on the cover plate 12, the pole assembly 13 is provided at an end of the cover plate 12, and the pole assembly 13 protrudes from the end of the cover plate 12. An avoidance notch is provided on the insulating support 20, an avoidance recess 22 is provided on the insulating support 20, and the avoidance recess 22 is used for avoiding the pole assemblies 13 of adjacent batteries.

The avoidance recess 22 may be the recess portion 14 on a profiling battery, that is, the groove wall of the avoidance recess 22 is adhered to the recess portion 14 on the battery to form the avoidance recess 22. The pole assembly 13 protrudes from the end of the cover plate 12 in the length direction, and the pole assembly 13 protrudes from the end face of the insulating support 20 in the length direction.

The pole assembly 13 is provided at an end of the cover plate 12 along the length direction, and the avoidance recess 22 is provided on the first insulating plate 21, the first insulating plate 21 being an insulating plate 21 located at the end of the battery along the length direction. The avoidance recess 22 may be provided at an end of the insulating support 20 or at two ends of the insulating support 20.

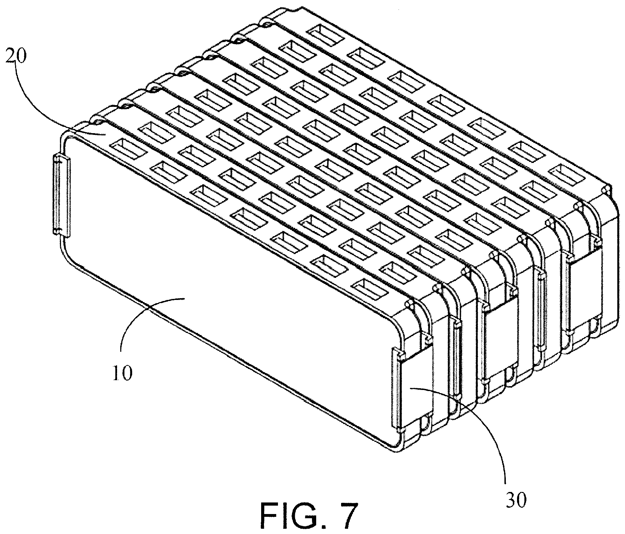

Further, in order to electrically connect multiple batteries, as shown in FIG. 7, the battery device may further include a bus bar 30 provided at a side of the first insulating plate 21 away from the battery, the bus bar 30 being connected to the pole assembly 13. For example, the bus bar 30 may be welded to the pole 131.

The pole assembly 13 protrudes out of the insulating support 20. The bus bar 30 may be a conductor plate or a conductor piece, and the bus bar 30 is connected to the pole 131 of adjacent batteries. Since the pole 131 protrudes from the end of the insulating support 20, the bus bar 30 does not need to be provided with a structure such as a special bending portion, so that the bus bar 30 has a simple structure and the bus bar 30 and the pole 131 are easily operated when being welded, which is advantageous in improving the production efficiency of the battery device.

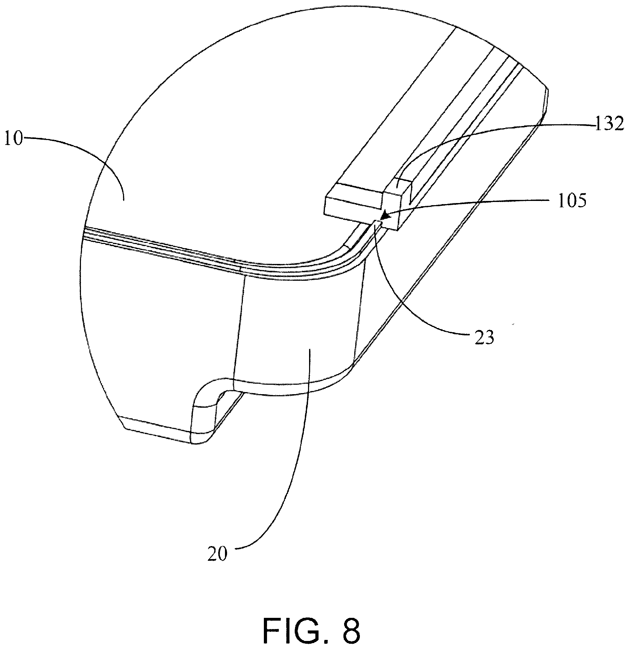

The pole assembly 13 includes a pole 131 and an insulating member 132. The pole 131 is provided on the cover plate 12, and the insulating member 132 is located at least between the pole 131 and the cover plate 12 so as to insulate the cover plate 12 from the pole 131. A part of the insulating member 132 coincides with the insulating support 20. As shown in FIG. 8, a protrusion 23 is provided on one side of the insulating support 20 close to the pole assembly 13, a first groove 105 is provided on one face of the insulating member 132 close to the insulating support 20, and the protrusion 23 extends into the first groove 105.

By providing the protrusion 23 on the insulating support 20 and the first groove 105 on the insulating member 132 in the embodiment of the present disclosure, the creepage distance of the battery can be increased by the cooperation of the protrusion 23 and the first groove 105, thereby improving the safety of the battery device. Furthermore, the protrusion 23 and the first groove 105 cooperate to enable the adjacent battery assemblies to be closely fitted, improving the compactness of the structure in the battery device.

The protrusion 23 may surround the insulating support 20, that is, at least one round of the protrusion 23 is provided on the insulating support 20. The first groove 105 on the insulating member 132 is extended into at the corresponding portions of the protrusion 23 and pole assembly 13. In order to avoid the interference when the protrusion 23 and adjacent insulating supports 20 are grouped, a second groove may be provided on the face of the insulating support 20 away from the pole assembly 13 for mating with the protrusion 23 on the adjacent insulating supports 20. The second groove partially surrounds the insulating support 20, and the second groove is not provided at the position where the insulating support 20 is provided with the avoidance recess 22.

As an example, the battery device includes multiple battery assemblies which are sequentially arranged. An end of the first insulating support 20 close to the second insulating support 20 is provided with a protrusion 23, and an end of the second insulating support 20 close to the first insulating support 20 is provided with a second groove. The protrusion 23 extends into the first groove 105. The first insulating support 20 is an insulating support 20 in a first battery assembly, and the second insulating support 20 is an insulating support 20 in a second battery assembly. The first battery assembly and the second battery assembly are two adjacent battery assemblies in multiple battery assemblies.

In an embodiment of the present disclosure, the material of the insulating support 20 may be a flexible material. For example, the material of the insulating support 20 may be plastic or rubber, etc. Manufacturing the insulating support 20 by the flexible material can improve the fit of the insulating support 20 to the battery. Of course, in practical applications, the material of the insulating support 20 may also be a rigid material, such as ceramic or hard plastic, etc. The embodiments of the present disclosure are not limited thereto.

The battery device provided by the embodiments of the present disclosure may be a battery module or a battery pack, etc. When the battery device is a battery module, the battery module may include a battery assembly composed of multiple batteries and an insulating support 20. The multiple battery assemblies are sequentially arranged, and an end insulating plate 21 is provided at the ends of multiple battery assemblies in the arrangement direction.

When the battery device is a battery pack, the battery pack may further include a box, a cooling device, a battery management system, and like components. The box has an accommodating space therein. The battery assembly, the cooling device, and the battery management system can be provided in the accommodating space. Alternatively, the battery management system may be provided outside the box. The embodiments of the present disclosure are not limited thereto.

The battery device provided by an embodiment of the present disclosure includes a battery, including therein a housing member 11 and a cover plate 12. A first flanging 112 extending in a direction away from the cover plate 12 is provided on the housing member 11, a second flanging 122 extending in a direction close to the housing member 11 is provided on the edge of the cover plate 12, and the housing member 11 and the cover plate 12 are connected by welding the first flanging 112 and the second flanging 122. Therefore, the housing member 11 and the cover plate 12 are welded at a point away from a pole assembly 13 and a cell, thereby preventing the heat generated when the housing member 11 is welded to the cover plate 12 from damaging the pole assembly 13 or the cell, and improving the yield and safety of the battery device. Besides, the insulating support 20 sleeved on the battery achieves the insulation between the battery and an adjacent conductive device, further improving the safety of the battery device.

The battery device provided by the embodiments of the present disclosure may be applied to an electric vehicle. When the battery is used for the electric vehicle, the battery device may be a battery pack that is mounted on the electric vehicle to supply energy to the electric vehicle.

In practical applications, the battery pack may be mounted to the carframe of an electric vehicle. The battery pack may be fixedly connected to the carframe. Alternatively, the battery pack may be a modular battery pack that can be removably connected to the vehicle body for easy replacement.

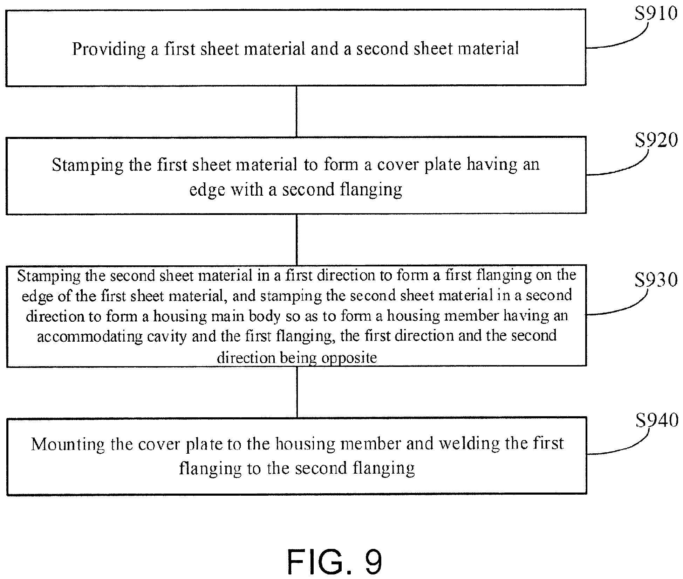

An exemplary embodiment of the present disclosure also provides a battery manufacturing method. As shown in FIG. 9, the battery manufacturing method may include the steps:
step S910, providing a first sheet material and a second sheet material;
step S920, stamping the first sheet material to form a cover plate having an edge with a second flanging; and
step S930, stamping the second sheet material in a first direction to form a first flanging on the edge of the first sheet material, and stamping the second sheet material in a second direction to form a housing body so as to form a housing member having an accommodating cavity and the first flanging, the first direction and the second direction being opposite;
wherein in step S940, the cover plate is mounted to the housing member, and the first flanging is welded to the second flanging.

According to the battery manufacturing method provided by the embodiments of the present disclosure, a cover plate 12 having a second edgefold is formed by stamping the first sheet material, the second sheet material is stamped twice in opposite directions to form and have an accommodating cavity and the first edgefold, and the housing member 11 and the cover plate 12 are connected by welding the first flanging 112 and the second flanging 122. Therefore, the housing member 11 and the cover plate 12 are welded at a point away from a pole assembly 13 and a cell, thereby preventing the heat generated when the housing member 11 is welded to the cover plate 12 from damaging the pole assembly 13 or the cell, and improving the yield and safety of the battery device. Besides, the insulating support 20 sleeved on the battery achieves the insulation between the battery and an adjacent conductive device, further improving the safety of the battery device.

Further, a battery manufacturing method provided by an embodiment of the present disclosure may further include:
in step S950, connecting the pole assembly to the cover plate, wherein the pole assembly includes a pole and an insulating member, and the insulating member is provided at least between the cover plate and the pole.

The pole assembly 13 is mounted to the cover plate 12 before the cover plate 12 and the housing member 11 are welded, so that the connection of the cover plate 12 and the housing member 11 is achieved by welding the first flanging 112 and the second flanging 122, avoiding welding damage to the pole assembly 13 provided on the cover plate 12.

Each step of the battery manufacturing method provided by the embodiments of the present disclosure will be described in detail below.

In step S910, a first sheet material and a second sheet material are provided.

The first sheet material is the raw material of the cover plate 12, and the first sheet material has a flat plate structure. When the battery has a cuboid structure, the first sheet material may be a rectangular sheet material. The material of the first sheet material may be stainless steel, aluminum alloy, copper alloy, etc. The second sheet material is the raw material of the cover plate 12, and the second sheet material has a flat plate structure. When the battery has a cuboid structure, the second sheet material may be a rectangular sheet material. The material of the second sheet material may be stainless steel, aluminum alloy, copper alloy, etc. The volume of the second sheet material is greater than the volume of the first sheet material.

In step S920, the first sheet material is stamped to form a cover sheet 12 having an edge with a second flanging 122.

The first sheet material is stamped and a pit is formed on the first sheet material. The bottom wall of the pit forms a plate body 121, and a side wall of the pit forms a second edgefold. The second flanging 122 is at least partially opposite to the face of the welding segment 104 away from the housing body 111, the welding segment 104 being welded to the second flanging 122. The first flanging 112 surrounds the housing body 111, and the second flanging 122 surrounds the first flanging 112.

As an example, the plate body 121 may be a rectangular flat plate, and the second flanging 122 is perpendicular to the plate body 121. The second flanging 122 may include a first flanging 112 plate, a second flanging 122 plate, a third flanging plate, and a fourth flanging plate. The first flanging 112 plate, the second flanging 122 plate, the third flanging plate, and the fourth flanging plate are successively connected. The first flanging 112 plate, the second flanging 122 plate, the third flanging plate, and the fourth flanging plate respectively correspond to one of edges of the plate body 121.

In step S930, the second sheet material is stamped in a first direction to form a first flanging 112 at the edge of the first sheet material, and the second sheet material is stamped in a second direction to form a housing body 111, thereby forming a housing member 11 having an accommodating cavity and the first flanging 112, the first direction and the second direction being opposite to each other.

The first stamping is performed on the second sheet material, with one pit formed on the second sheet material and a first flanging 112 formed on a side wall of the pit. A bottom wall of the pit is an intermediate portion. The second side stamping is performed on the intermediate portion, and a second pit is formed on the intermediate portion by the second stamping, the second pit being the housing body 111. The bottom wall of the second pit forms an end panel and the side wall of the second pit forms a frame.

The frame is provided on one face of the end panel close to the cover plate 12, the frame is in a ring-shaped structure, and the frame and the end panel enclose to form an accommodating cavity. The first flanging 112 is connected to an end of the frame away from a short panel, and the first flanging 112 extends from an end of the frame away from the end panel towards a direction close to the end panel. The first flanging 112 is an outer flanging, that is, the first flanging 112 is located on the outer side of the frame, and the outer side of the frame refers to one side of the frame away from the accommodating cavity. The frame can be formed by connecting multiple frame plates which are connected end to end, and the edges of the frame plate and the end panel are in a one-to-one correspondence.

The first flanging 112 includes a connecting segment 103 and a welding segment 104. The connecting segment 103 is connected to an end of the housing body 111 close to the cover plate 12, and the connecting segment 103 is located at a side of the housing body 111 away from the accommodating cavity. The welding segment 104 is connected to an end of the connecting segment 103 away from the housing body 111, and a gap is provided between the welding segment 104 and the housing body 111.

The connecting segment 103 is connected to an end of the frame away from the end panel, and the connecting segment 103 extends outwardly (in the direction away from the accommodating cavity) from the frame edge. For example, the connecting segment 103 may be provided perpendicular to the frame when the connecting segment 103 is a planar structure. Alternatively, the connecting segment 103 may have a cambered surface structure, and the connecting segment 103 of the cambered surface structure can smoothly transition with the frame and the welding segment 104 to avoid the formation of stress concentration. The welding segment 104 is connected to an end of the connecting segment 103 away from the frame, the welding segment 104 being configured for being welded to the cover plate 12. The welding segment 104 may be provided parallel to the frame with a gap between welding segment 104 and the frame. The gap, on the one hand, can prevent the heat generated by the welding from being transmitted to the cell and. On the other hand, it can be used to accommodate a welding seat during the welding to facilitate welding.

Illustratively, the battery provided by the embodiments of the present disclosure may be cuboid or approximately cuboid. On this basis, the housing body 111 is a cuboid thin-walled housing with one face open, and the first flanging 112 is a rectangular or approximately rectangular ring-shaped structure. The end panel is a rectangular plate. The frame is formed by a first frame plate, a second frame plate, a third frame plate, and a fourth frame plate which are connected end to end. The first frame plate, the second frame plate, the third frame plate, and the fourth frame plate are respectively provided on one of edges of the end panel. The first frame plate, the second frame plate, the third frame plate, and the fourth frame plate, and the end panel are perpendicularly provided.

The welding segment 104 includes a first welding face, a second welding face, a third welding face, and a fourth welding face which are sequentially connected to form a ring-shaped structure. The first welding face is provided on a side of the first frame plate away from the accommodating cavity, and the first welding face and the first frame plate are arranged in parallel. The second welding face is provided on a side of the second frame plate away from the accommodating cavity, and the second welding face and the second frame plate are arranged in parallel. The third welding face is provided on a side of the third frame plate away from the accommodating cavity, and the third welding face and the third frame plate are arranged in parallel. The fourth welding face is provided on a side of the fourth frame plate away from the accommodating cavity, and the fourth welding face and the fourth frame plate are arranged in parallel.

It needs to be noted that in an embodiment of the present disclosure, the order of executing step S920 and step S930 can be interchanged. That is, step S920 can be executed first, and then step S930 is executed; or firstly step S930 is executed, and then step S920 is executed. Alternatively, step S920 and step S930 may be executed at the same time. The embodiments of the present disclosure do not specifically define this. In addition, in step S930, the order of two stampings of the second sheet material can also be changed, namely, the first flanging 112 can be formed by one stamping first, and then the housing body 111 is formed by the second stamping. Alternatively, the housing body 111 may be formed by the first stamping and the first flanging 112 is formed by the second stamping.

In step S940, the cover plate 12 is mounted to the housing member 11, and the first flanging 112 is welded to the second flanging 122.

The first flanging 112 and the second flanging 122 at least partially coincide when the cover plate 12 is mounted to the housing member 11. That is, the second flanging 122 surrounds the first flanging 112. Welding the first flanging 112 to the second flanging 122 includes placing a weld seat in a gap between the housing body 111 and the first flanging 112. The first flanging 112 is welded to the second flanging 122. For example, the first flanging 112 and the second flanging 122 are welded by laser welding, resistance welding, friction welding, etc.

In step S950, the pole assembly 13 is connected to the cover plate 12. The pole assembly 13 includes a pole 131 and an insulating member 132, and the insulating member 132 is provided at least between the cover plate 12 and the pole 131.

The cover plate 12 may be provided with a through-hole, and the pole 131 is threaded through the through-hole. The insulating member 132 is also threaded through the through-hole, the insulating member 132 isolating the pole 131 from the through-hole wall. For example, the insulating member 132 may include a first insulating portion and a second insulating portion, the first insulating portion being threaded through a through-hole of the cover plate 12, and the second insulating portion being provided on the cover plate 12 and a face away from the housing body 111 to isolate the pole 131 from a surface of the cover plate 12. The through-holes of the insulating member 132 and the cover plate 12 may be an interference fit, or the insulating member 132 and the cover plate 12 may be connected by means of an adhesive connection.

It could be understood that the steps of mounting an electrical core to the housing member 11, connecting the pole 131 to the tab, etc. may also be included prior to welding the cover plate 12 to the housing member 11 in the embodiments of the present disclosure. The embodiments of the present disclosure do not specifically define this.

According to the battery manufacturing method provided by the embodiments of the present disclosure, a cover plate 12 having a second edgefold is formed by stamping the first sheet material, the second sheet material is stamped twice in opposite directions to form and have an accommodating cavity and the first edgefold, and the housing member 11 and the cover plate 12 are connected by welding the first flanging 112 and the second flanging 122. Therefore, the housing member 11 and the cover plate 12 are welded at a point away from a pole assembly 13 and a cell, thereby preventing the heat generated when the housing member 11 is welded to the cover plate 12 from damaging the pole assembly 13 or the cell, and improving the yield and safety of the battery device. Besides, the insulating support 20 sleeved on the battery achieves the insulation between the battery and an adjacent conductive device, further improving the safety of the battery device.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery (10), **characterized by** comprising:
a housing member (11) provided therein with an accommodating cavity having an opening; and
a cover plate (12) provided at an opening of the housing member (11) to block the opening;
wherein the housing member (11) comprises a housing body (111) and a first flanging (112), the first flanging (112) is connected to an end of the housing body (111) close to the cover plate (12), and the first flanging (112) extends in a direction of the housing body (111) away from the cover plate (12); the cover plate (12) comprises a plate body (121) and a second flanging (122), the second flanging (122) is provided at an edge of the plate body (121), and the second flanging (122) extends in a direction of the plate body (121) close to the housing member (11), the first flanging (112) being welded to the second flanging (122).

2. The battery (10) according to claim 1, **characterized in that** the first flanging (112) comprises:
a connecting segment (103), wherein the connecting segment (103) is connected to an end of the housing body (111) close to the cover plate (12), and the connecting segment (103) is located on a side of the housing body (111) away from the accommodating cavity; and
a welding segment (104) connected to an end of the connecting segment (103) away from the housing body (111), the welding segment (104) and the housing body (111) having a gap therebetween.

3. The battery (10) according to claim 2, **characterized in that** the second flanging (122) is at least partially opposite to a face of the welding segment (104) away from the housing body (111), the welding segment (104) being welded to the second flanging (122).

4. The battery (10) according to claim 3, **characterized in that** the first flanging (112) is located between the second flanging (122) and the housing body (111).

5. The battery (10) according to claim 2, **characterized in that** the battery (10) comprises two first surfaces (101) and multiple second surfaces (102), an area of the first surface (101) being greater than the area of the second surface (102), the first surface (101) being a surface parallel to the cover plate (12), the multiple second surfaces (102) being provided between the two first surfaces (101), and the first flanging (112) being provided on the second surface (102) of the battery (10).

6. The battery (10) according to claim 5, **characterized in that** the connecting segment (103) is perpendicular to the second surface (102), and the welding segment (104) and the first surface (101) have an included angle of 0-180°.

7. The battery (10) according to claim 1, **characterized in that** the battery (10) further comprises:
a pole assembly (13) provided at an end of the cover plate (12) in a length direction of the cover plate (12), wherein the pole assembly (13) partially protrudes from the end of the cover plate (12) in the length direction.

8. A battery device, **characterized in that** the battery device comprises a battery assembly, the battery assembly comprising:
the battery (10) according to any one of claims 1 to 7; and
an insulating support (20), wherein the insulating support (20) is sleeved on the battery (10).

9. The battery device according to claim 8, **characterized in that** the insulating support (20) has a first accommodating portion (201) and a second accommodating portion (202) provided thereon, the second accommodating portion (202) surrounds the first accommodating portion (201), the housing body (111) is located in the first accommodating portion (201), and the welding segment (104) and at least a part of the second flanging (122) are located in the second accommodating portion (202).

10. The battery device according to claim 8, **characterized in that** the cover plate (12) has a pole assembly (13) provided thereon, the pole assembly (13) being provided at an end of the cover plate (12), and the pole assembly (13) protruding from the end of the cover plate (12).

11. The battery device according to claim 10, **characterized in that** the pole assembly (13) comprises a pole (131) and an insulating member (132), the pole (131) being provided on the cover plate (12), the insulating member (132) being located at least between the pole (131) and the cover plate (12) to isolate the cover plate (12) from the pole (131), and a portion of the insulating member (132) coinciding with the insulating support (20);
a protrusion (23) is provided on a side of the insulating support (20) close to the pole assembly (13), a first groove (105) is provided on a face of the insulating member (132) close to the insulating support (20), and the protrusion (23) extends into the first groove (105).

12. The battery device according to claim 11, **characterized in that** a face of the insulating support (20) away from the protrusion (23) is provided with a second groove, the second groove being used for mating with the protrusion (23) on adjacent insulating supports (20).

13. A battery manufacturing method, **characterized in that** the battery manufacturing method comprises:
providing a first sheet material and a second sheet material;
stamping the first sheet material to form a cover plate (12) having an edge with a second flanging (122); and
stamping the second sheet material in a first direction to form a first flanging (112) on the edge of the second sheet material, and stamping the second sheet material in a second direction to form a housing body (111) so as to form a housing member (11) having an accommodating cavity and the first flanging (112), the first direction and the second direction being opposite;
wherein the cover plate (12) is mounted to the housing member (11), and the first flanging (112) is welded to the second flanging (122).

14. The battery manufacturing method according to claim 13, **characterized in that** welding the first flanging (112) and the second flanging (122) comprises:
placing a weld seat in a gap between the housing body (111) and the first flanging (112); and
welding the first flanging (112) and the second flanging (122).

15. The battery manufacturing method according to claim 13, **characterized in that**, before mounting the cover plate (12) to the housing member (11), the method further comprises:
connecting a pole assembly (13) to the cover plate (12), wherein the pole assembly (13) comprises a pole (131) and an insulating member (132), and the insulating member (132) is provided at least between the cover plate (12) and the pole (131).
